# EUROPEAN PATENT APPLICATION

(11) **EP 4 600 582 A1**
(43) Date of publication of application: **13.08.2025**
(21) Application number: 23874363.7
(22) Date of filing: 05.10.2023
(51) Int. Cl.: F24S 25/50, H02S 20/30, F24S 30/425

(54) **SOLAR PANEL SECURING SYSTEM**

(30) Priority: 07.10.2022 ES 202230869
(71) Applicant: INGECID, S.L., 39005 Santander (ES)
(72) Inventor: RICO ARENAL, Jokin, 39005 SANTANDER (Cantabria) (ES); GONZÁLEZ GALVÁN, Cesar, 39005 Santander (Cantabria) (ES); NISTAL IGLESIAS, Pablo, 39005 SANTANDER (Cantabria) (ES)
(74) Representative: García Gómez, José Donato
(86) International application number: PCT/ES2023/070594
(87) International publication number: WO 2024/074749

(57) **Abstract**

Solar panel fastening system comprising: a pair of upper cables (1) and a pair of lower cables (6), arranged longitudinally and fixed at opposite ends to support posts (2); transverse cables (11) mounted on the upper cables (1) and fastening by means of suspension rods (5) support means (4) of parallel rows (31) of solar panels (3) arranged horizontally, in the transverse direction, below the upper cables. Longitudinally, below the lower cables (6), it comprises braced side arches (7) and oblique braces (8) fixing the sides of the support means (4) of the solar panels (3) with the corresponding side arch (7).

## Description

### Technical Field.

The present invention is applicable in solar energy collection installations and more specifically in the fastening of solar panels.

### Prior state-of-the-art.

The high cost of electrical energy and advances in the development of more efficient solar panels have meant an important boost for the mounting, both domestically and industrially, of solar energy collection installations that use solar panels, specifically photovoltaic ones, for the generation and supply of electrical energy.

Currently, it is common practice to mount the solar panels on rigid structures that are fixed to a surface, for example a field or a roof, and that are constituted by a framework of metal profiles that defines a substantially flat surface on which the solar panels are fixed by means of tightening clamps.

The use of these rigid structures fixed to the ground impedes the use of the soil for cultivation or other activities. In addition, these types of structures cannot be fixed over waterways, roads or pathways for people or vehicles, or in other areas where the installation of said structures would be unfeasible or would not be compatible with the normal use of said areas.

Some systems are also known for hanging solar panels in an elevated position by means of tensioned cables; however, these known systems do not provide the solar panels with the necessary stability, since the sail effect caused by the wind on the large exposed surface of the solar panels causes sudden movements of the panels and other unwanted effects. These systems are complex in their configuration and in their arrangement on the ground, where the movement of the panels, to be oriented in their ideal position for collecting solar energy, is carried out individually in each panel, or by means of rigid structures that can be driven by motors. Therefore, the technical problem that arises is the development of a system for fastening solar panels in an elevated position with respect to the ground and that guarantees the stability of the solar panels in adverse wind conditions and that allows their inclination to be adjusted in a controlled way to orient them in the direction of greater solar collection.

### Summary of the invention.

The solar panel fastening system object of the invention comprises a pair of upper cables arranged longitudinally and fixed at their opposite ends to respective substantially vertical support posts fixed to the ground. Mounted on said upper cables are transverse cables from which are suspended, by means of suspension rods, parallel rows of solar panel support means, arranged below said upper cables, oriented in a transverse direction with respect to the upper cables, and spaced apart in the longitudinal direction.

Said transverse direction must be interpreted as perpendicular or oblique with respect to the longitudinal direction of the upper cables.

This system further comprises a pair of lower cables arranged longitudinally below the support means of the solar panels. Said lower cables are fixed at the ends opposite to the aforementioned support posts and fixed, at intermediate areas, to the support means of the solar panels, said lower cables contributing to the stabilisation of the solar panels and the support means.

To ensure the stability of the support means of the solar panels and prevent their displacement due to the effect of the wind, this system comprises braced side arches, arranged longitudinally below the lower cables and fixed at their ends opposite to each foundation; and oblique braces that fix the lower cables, or the sides of the support means of the solar panels with the arc at the corresponding side, forming meshes for securing and immobilising the support means of the solar panels.

The system of the invention has means for varying the inclination of the rows of solar panels in the longitudinal and transverse directions, and orienting them in the direction of maximum solar irradiation, depending on the installation area of the system.

In one embodiment of the invention, the suspension rods are fixed to the front and rear ends of the solar panel support means, and have an adjustable length, said suspension rods forming means for adjusting the inclination of the solar panel support means both in the longitudinal and transversal directions.

The posts for fastening the upper and lower cables may have a fixed length or height; the ends of the upper and lower cables being fixed to said posts at points located at predetermined heights.

In another embodiment of the invention, it is provided that the variation of the inclination of the rows of solar panels suspended from the suspension rods is achieved by varying the height of the opposite ends of the upper and lower cables, regardless of whether the suspension rods have a fixed or variable length, it being provided for this purpose that the posts are telescopic and that they comprise a fixed lower section and a movable upper section to which the ends of the upper and lower cables are fixed.

Regardless of whether the posts have a fixed height or are telescopic, of variable height, it is provided that at least one of the ends of the upper and lower cables can be fixed to the corresponding post by means of a device for regulating the length and tension of said cables. This adjustment device can be a cable winding reel, associated with a motorised or manual drive means, incorporating, for example, a stop pawl for retaining the reel in the desired position.

The support means of the solar panels may be constituted by perimeter frames to which a solar panel, or a complete row of solar panels, is fixed, or be constituted by lattices on which several rows of solar panels are fixed.

In order for the posts to withstand the tension of the upper and lower cables, said posts may be embedded in the ground or mounted on a foundation by means of a joint, having one or more counter-braces located on the face opposite to that for fixing the upper and lower cables.

This described system provides competitive advantages over that which is already known, being able to be placed over the bed of waterways or rivers regardless of the width between their banks, with a simple structure in its mounting and in the tilting movement of the panels in their collection of solar energy.

### Brief description of the contents of the drawings.

In order to complement the description that is being carried out and with the purpose of facilitating a better understanding of the characteristics of the invention, the present specification is accompanied by a set of drawings, wherein, by way of a non-limiting example, the following has been represented:

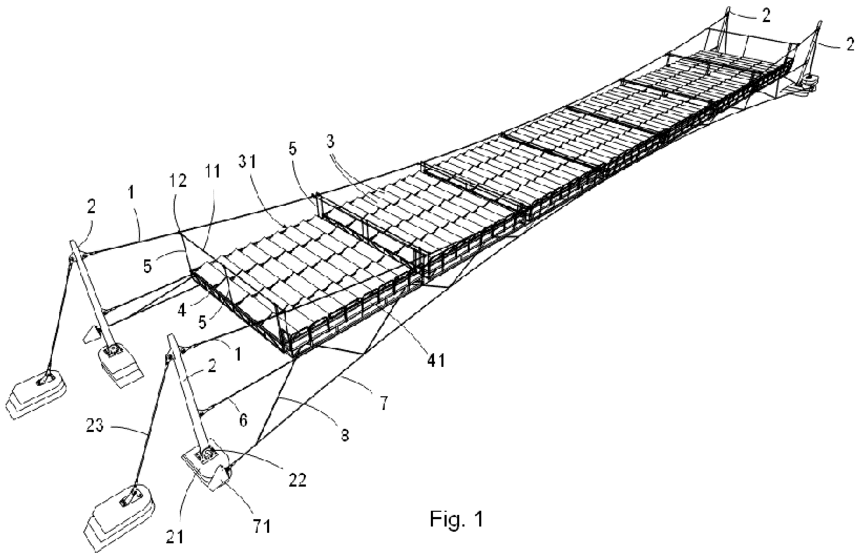

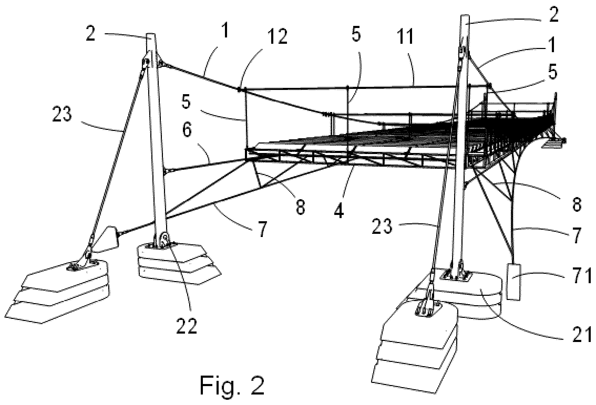

Figures 1 and 2 show perspective views of an exemplary embodiment of the solar panel fastening system according to the invention, provided with fixed height posts and in which the fastening means of the transverse rows of solar panels are constituted by modular lattices.

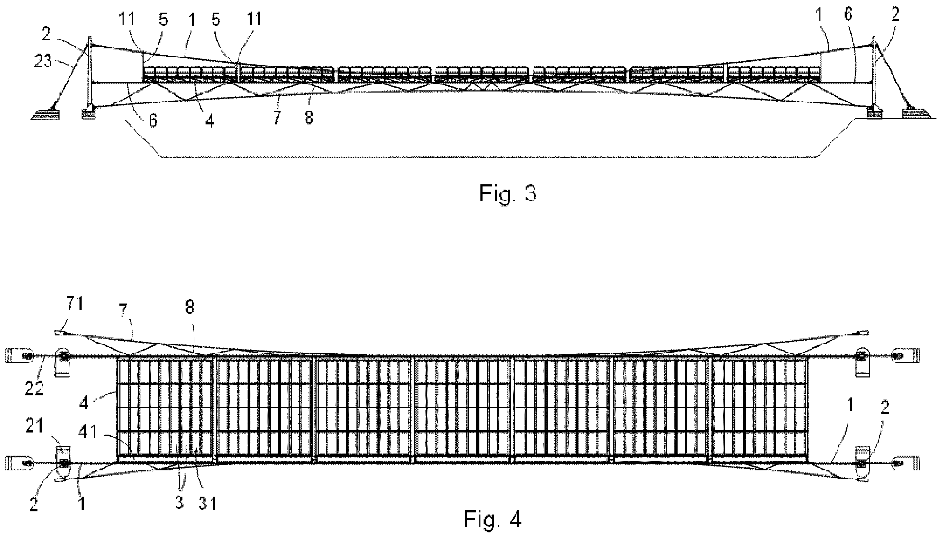

Figures 3 and 4 show elevational and plan views of the system of the previous figures.

### Detailed explanation of embodiments of the invention.

In the exemplary embodiment shown in the attached figures, the solar panel fastening system comprises upper cables (1) arranged longitudinally and fixed at the opposite ends to substantially vertical posts (2), fixed in this case to a foundation (21) by means of a joint (22) and fastened by means of a counter-brace (23).

Transverse cables (11) are fixed to the aforementioned upper cables (1), from which support means (4) of rows (31) of solar panels (3) are suspended by means of suspension rods (5).

In the embodiment shown, said support means (4) are constituted by lattices, in the form of longitudinally aligned modules. The transverse cables (11) have clamps (12) at their ends for their movable mounting along the upper cables (1) and their fixing in an intermediate area of said upper cables, once the lattice forming the support means (4) has reached the desired position.

The lower ends of the suspension rods (5) are fixed to the front and rear ends of the support means (4) of the rows (31) of solar panels (3).

Said suspension rods (5) have an adjustable length which allows the support means (4) to be tilted in the longitudinal and transverse directions, so that the rows (31) of solar panels (3) mounted on said support means (4) vary their inclination, which allows them to be oriented simultaneously in the direction of maximum solar irradiation.

The system comprises, below the support means (4) of the rows (31) of solar panels (3), lower cables (6) arranged longitudinally and fixed at their ends to the posts (2), said lower cables contributing to the stabilisation of the support means (4) of the solar panels (3).

This system comprises below the lower cables (6) longitudinally oriented side arches (7), fixed at their ends to foundations (71), and oblique braces (8) which, in this case, fix the sides of the support means (4) of the solar panels to the corresponding side arches (7), forming triangular meshes that prevent the swaying, due to the effect of the wind, of the support means (4) carrying the rows (31) of solar panels.

In the example shown, the support means (4) of the rows (31) of solar panels (3) are laterally provided with a service walkway (41), provided with a handrail, for carrying out the installation or maintenance tasks of the system.

Having sufficiently described the nature of the invention, as well as a preferred exemplary embodiment, it is noted for appropriate action that the materials, shape, size and arrangement of the elements described may be modified, provided that this does not alter the essential characteristics of the invention which are claimed below.

## Claims

1. - A solar panel fastening system; **characterised in that** it comprises:
- a pair of upper cables (1), arranged longitudinally and fixed at opposite ends to respective support posts (2);
- parallel rows (31) of solar panels (3) provided with support means (4), said rows (31) of solar panels being horizontally arranged below the upper cables (1), oriented in a transverse direction with respect to the upper cables (1) and spaced apart in the longitudinal direction;
- transverse cables (11) having clamps (51) at their ends mounted with the possibility of longitudinal movement on the upper cables (1) and being provided with fixing means at any point of said upper cables (1);
- suspension rods (5) for supporting the solar panels, comprising: an upper end fixed to one of the transverse cables (11) and a lower end fixed to the support means (4) of the solar panels (3);
- a pair of lower cables (6), arranged longitudinally below the support means (4) of the solar panels (3), fixed at the ends opposite to the support posts (2) and, at intermediate areas, to the support means (4) of the solar panels (3);
- braced lateral arches (7), arranged longitudinally below the lower cables (6) and fixed at their opposite ends to respective foundations (71); and
- oblique braces (8) that fix the sides of the support means (4) of the solar panels (3) with the corresponding side arch (7), forming meshes for securing and immobilising the support means (4) of the solar panels (3).

2. The system according to claim 1, **characterised in that** the suspension rods (5) are fixed to the front and rear ends of the support means (4) of the solar panels (3) and have an adjustable length; said suspension rods (5) forming means for adjusting the inclination of the solar panels (3) in the longitudinal and transverse directions.

3. The system according to claim 1, **characterised in that** the posts (2) have a fixed length and the ends of the upper (1) and lower (6) cables are fixed to said posts (2) at points located at predetermined heights.

4. The system according to claim 1, **characterised in that** the posts (2) are telescopic and comprise a fixed lower section and a movable upper section to which the ends of the upper (1) and lower (6) cables are fixed, said telescopic posts (2) forming means for varying the inclination, in the longitudinal direction, of the upper (1) and lower (6) cables, and of the rows (31) of solar panels (3) suspended from the suspension rods (5).

5. The system according to claim 1, **characterised in that** at least one of the ends of the upper (1) and lower (6) cables is fixed to the corresponding post (2) by means of a device for regulating the length and tension of said upper and lower cables.

6. The system according to claim 1, **characterised in that** the support means (4) of the solar panels consist of perimeter frames to which a solar panel (3) or a row (31) of solar panels (3) is fixed.

7. The system according to claim 1, **characterised in that** the support means (4) of the solar panels consist of lattices on which several rows (31) of solar panels (3) are fixed.
